# FASCICULE DE BREVET EUROPEEN

(11) **EP 3 531 047 B1**
(45) Date de publication et mention de la délivrance du brevet: **11.02.2026**
(21) Numéro de dépôt: 19305203.2
(22) Date de dépôt: 20.02.2019
(51) Int. Cl.: F25C 3/04

(54) **PROCÉDÉ DE FABRICATION DE NEIGE ARTIFICIELLE ET PRODUIT POUR LA MISE EN OEUVRE DU PROCÉDÉ**
HERSTELLUNGSVERFAHREN VON KUNSTSCHNEE, UND PRODUKT FÜR DIE UMSETZUNG DIESES VERFAHRENS
METHOD FOR MANUFACTURING ARTIFICIAL SNOW AND PRODUCT FOR IMPLEMENTING THE METHOD

(30) Priorité: 23.02.2018 FR 1851582
(43) Date de publication de la demande: 28.08.2019
(73) Titulaire: Technoalpin France, 69570 Dardilly (FR); Consejo Superior De Investigaciones Científicas, 28006 Madrid (ES)
(72) Inventeur: GALVIN, Michel, 44470 CARQUEFOU (FR); VERDAGUER, Albert, 08193 Barcelone (ES)
(74) Mandataire: Jacobacci Coralis Harle

(56) Documents cités:
- AT-A4- 509 864
- ZHIPING HUO ET AL: "Synthesis of zeolite NaP with controllable morphologies", MICROPOROUS AND MESOPOROUS MATERIALS, ELSEVIER, AMSTERDAM ,NL, vol. 158, 12 March 2012 (2012-03-12), pages 137 - 140, XP028489673, ISSN: 1387-1811, [retrieved on 20120321], DOI: 10.1016/J.MICROMESO.2012.03.026

## Description

### DOMAINE TECHNIQUE AUQUEL SE RAPPORTE L'INVENTION

La présente invention concerne le domaine de la fabrication de neige artificielle.

Elle concerne plus particulièrement un procédé de fabrication de neige consistant à incorporer dans de l'eau des particules d'agent de nucléation et à projeter ladite eau contenant lesdites particules d'agent de nucléation dans une ambiance dont la température est inférieure à 0°C, au moyen d'un dispositif adapté à la production de neige.

L'invention concerne également un produit particulier, sous forme d'une poudre, destiné à être incorporé dans de l'eau pour servir d'agent de nucléation dans le cadre de la mise en œuvre du procédé de fabrication de neige précité.

Elle concerne encore l'utilisation d'un produit sous forme poudreuse pour servir d'agent de nucléation dans le cadre la mise en œuvre du procédé de fabrication de neige.

### ARRIERE-PLAN TECHNOLOGIQUE

De manière générale, il est connu de fabriquer de la neige artificielle, sur les pistes de ski en particulier, afin de pallier des défauts de présence de neige naturelle.

La neige artificielle est fabriquée au moyen de dispositifs de production de neige (encore appelés « enneigeurs »), alimentés par des canalisations d'eau sous pression et éventuellement d'air sous pression.

Ces dispositifs pulvérisent l'eau dans l'air ambiant froid sous forme de gouttelettes qui congèlent ou cristallisent pour la production de la neige.

Les possibilités de production de neige, ainsi que la qualité de la neige produite, dépendent des conditions atmosphériques en présence.

D'une manière générale, plus l'air ambiant est froid plus il est facile de produire de la neige artificielle de bonne qualité. Corollairement, une neige de qualité n'est pas facile de produire dans des conditions assez fréquentes de températures négatives proches de 0°C.

Les dispositifs de production de neige peuvent comprendre une perche fixée solidement dans le sol, qui achemine, via des conduits d'alimentation distincts, de l'eau sous pression et de l'air sous pression jusqu'à une tête d'enneigement située à son extrémité libre, à plusieurs mètres voire une dizaine de mètres de hauteur.

La tête d'enneigement comprend souvent une pluralité de buses de pulvérisation dont le réglage de l'alimentation en eau sous pression et en air sous pression est réalisé par une ou plusieurs vannes, afin d'optimiser la quantité de neige artificielle à produire en fonction des conditions météorologiques.

On connait également des dispositifs de production de neige comprenant des buses de pulvérisation d'eau associées à une structure de ventilateur dont le flux d'air est adapté pour assurer la dispersion dans l'air ambiant des gouttelettes d'eau produites.

Dans les deux cas, si on se contente de cette pulvérisation d'eau, les gouttes ne congèlent pas en vol mais seulement lors de l'impact sur le sol, créant une plaque de glace
Cela est dû au phénomène dit « de surfusion », qui empêche l'eau pure de congeler naturellement avant plusieurs dizaines de degrés Celsius en dessous de zéro.

Ainsi, il a été démontré que pour faire congeler l'eau à des températures relativement hautes, il est nécessaire d'amorcer le processus au moyen d'un ou de plusieurs corps étrangers, appelé(s) « agent(s) de nucléation ».

Pour cela, il est classique d'injecter des noyaux de glace dans le jet principal des dispositifs précités de fabrication de neige, au moyen d'un ou de plusieurs appareils appelés « nucléateurs » associés aux buses de pulvérisation d'eau.

Ce procédé est efficace mais il demande de produire du froid, en général par une détente violente d'air comprimé et donc consomme une l'énergie importante. L'impact sur le coût d'une installation d'enneigement est donc considérable.

Il est aussi possible de réaliser la nucléation en effectuant des chocs sur l'eau, en particulier au moyen d'ultrasons.
Cependant les appareils correspondants sont complexes et consomment également beaucoup d'énergie ; de plus, sans air comprimé, les agents de nucléation ne sont pas bien répartis dans le jet et la puissance nécessaire devient supérieure à celle nécessaire à une nucléation par air comprimé classique.

Le document US-4 200 228 propose une autre solution pour augmenter la température à partir de laquelle les dispositifs de production de neige peuvent être mis en œuvre dans de bonnes conditions et de produire de la neige sans air comprimé.

Pour cela, il est prévu d'incorporer dans l'eau des particules faisant office d'agents de nucléation qui se présentent sous la forme de fragments de cellules dérivées de microorganismes et contenant une protéine capable d'initier la cristallisation, lorsque cette eau est pulvérisée dans l'air en fines gouttelettes.

Le produit correspondant, sous forme poudreuse, est commercialisé par la société SNOMAX, sous la dénomination SNOMAX (marque déposée).

Ce produit agit en dessous de -2,8°C et il est le meilleur agent de nucléation industriel produit à ce jour.

Sa présence a également d'autres vertus comme celle de rendre la neige plus facile à travailler et donc d'économiser du temps de damage

Cependant, la production de ce produit biologique pour la fabrication de neige artificielle est relativement onéreuse.

De plus, il demande des conditions de stockage au froid particulières, et sa mise en œuvre nécessite un mode opératoire contraignant tenant compte de sa nature biologique.

D'autres agents de nucléation plus performants existent, par exemple le métaldéhyde, actif à -0,4°C mais ils sont inexploitables dans le contexte de la production de neige en particulier à cause de leur toxicité.

Le document AT 509 864 A4 décrit des particules de silicate entre 0,05 et 5 µm, destinées à la nucléation dans la fabrication de neige. Le document ZHIPING HUO ET AL: "Synthesis of zeolite NaP with controllable morphologies", MICROPOROUS AND MESOPOROUS MATERIALS, ELSEVIER, AMSTERDAM, NL, vol. 158, 12 mars 2012, pages 137-140, (XP028489673) décrit des particules de zéolite synthétique ayant des microcavités à la surface.

Il existe donc un besoin de proposer un nouveau type d'agent de nucléation pour la fabrication de neige artificielle qui soit peu onéreux, facile à mettre en œuvre et peu polluant.

### OBJET DE L'INVENTION

Afin de remédier à l'inconvénient précité de l'état de la technique, la présente invention propose un procédé de fabrication de neige selon la revendication 1.

Selon une autre particularité, au moins 10% desdites particules de silicate comportent au moins une microcavité débouchant par une ouverture de surface et délimitée par une paroi latérale qui définit son volume intérieur, laquelle au moins une microcavité est apte à initier la naissance ou la génération de glace dans son volume intérieur lorsque ladite projection d'eau est réalisée dans une ambiance dont la température est comprise entre -4°C et -0,5°C.

De manière avantageuse, le procédé consiste à utiliser une base de particules de silicate, dans laquelle base au moins 80% des particules comportent un diamètre de sphère équivalent unitaire inférieur à 15µm, et de préférence inférieur à 5µm.

Par la notion de diamètre de sphère équivalent, on entend le diamètre d'une sphère ayant le même volume que celui d'une particule d'agent de nucléation.

Des résultats intéressants ont été obtenus avec des particules de silicate choisies parmi le groupe constitué des feldspaths, des tectosilicates des inosilicates et des phyllosilicates. En particulier le silicate est avantageusement un feldspath de type microcline et/ou un feldspath de type orthoclase.

Il a notamment été ainsi possible de cristalliser des gouttelettes d'eau sur une plaque froide au dessus de -2,8°C et jusqu'à -0,3°C.

Selon d'autres caractéristiques non limitatives et avantageuses du procédé, prises individuellement ou selon toutes les combinaisons techniquement possibles :
- pour la fabrication de neige, les particules de silicate sont incorporées dans l'eau en nombre compris entre 5 x 10⁵ et 2 x 10¹⁰ particules par litre d'eau, de préférence entre 5 x 10⁵ et 7 x 10⁸ particules par litre d'eau ;
- ladite projection de l'eau contenant lesdites particules de silicate consiste en une pulvérisation de l'eau sous forme de gouttelettes dont la taille est comprise entre 100 et 700µm ;
- les particules de silicate sont incorporées dans l'eau de manière à obtenir entre une particule de silicate pour 10 gouttelettes d'eau et dix particules de silicate par gouttelette d'eau ;

Le procédé selon l'invention prévoit de soumettre lesdites particules à au moins un traitement d'activation préalablement à leur incorporation dans l'eau, lequel au moins un traitement d'activation est la réalisation des microcavités sur la surface desdites particules, permettant d'augmenter la température à laquelle lesdites particules sont capables d'initier la formation de glace.

Cette réalisation de microcavités (ou pores, ou orifices) peut consister, soit à créer des microcavités qui n'existaient pas avant le traitement appliqué, soit à mettre à jour (ou révéler) des microcavités préexistantes mais qui étaient au moins partiellement obturées auparavant.

La ou les microcavités en question débouchent par une ouverture de surface et elles sont délimitées par une paroi latérale, leur profondeur étant avantageusement supérieure au diamètre du disque équivalant à la surface de ladite ouverture de surface (appelé diamètre équivalent).

Dans ce cadre on applique avantageusement l'un ou plusieurs parmi les traitements suivants :
- application aux particules préalablement imprégnées d'eau d'au moins un traitement par le froid, et de manière préférée d'au moins deux traitements par le froid successifs, séparés par une phase de réchauffement. Alors ledit ou lesdits traitement(s) par le froid consiste(nt) avantageusement en un refroidissement des particules en dessous de -7°C pendant au moins 10 minutes, suivi d'un réchauffement au dessus de 0°C pendant au moins 10 minutes.
- immersion desdites particules dans une solution aqueuse de potasse ; alors ledit traitement d'activation comprend avantageusement l'étape consistant à immerger lesdites particules dans une solution aqueuse de potasse durant au moins 20 minutes et à une température comprise entre 0°C et 90°C.
- application aux particules d'une étape de nettoyage et de séparation desdites particules par ultrasons ;
   cette étape de traitement par ultrasons est avantageusement réalisée en milieu aqueux avant l'un des traitements mentionnés ci-dessus.
- exposition desdites particules à une atmosphère d'ozone dans un réacteur adapté, de préférence durant au moins 20 minutes, à une température comprise entre 0°C et 300°C.
- exposition desdites particules à un plasma d'oxygène dans un réacteur adapté, de préférence durant au moins 10 minutes à une température entre 0°C et 300°C.

L'invention propose également un produit selon la revendication 13.

Dans ce produit, de préférence, au moins 10 % des particules de silicate comportent au moins une microcavité débouchant par une ouverture de surface et délimitée par une paroi latérale ; de préférence encore, la profondeur de ladite au moins une microcavité est supérieure au diamètre équivalent de son ouverture de surface.

Cette ouverture de surface de ladite au moins une microcavité a de préférence un diamètre équivalent compris entre 100 et 1000nm et une profondeur comprise entre 700nm et 3 µm.

L'invention propose encore l'utilisation d'un tel produit sous forme poudreuse pour servir d'agent de nucléation dans le cadre la mise en œuvre du procédé de fabrication de neige artificielle décrit ci-dessus.

### Préparation de la poudre de silicate

Pour l'obtention des particules de silicate on utilise des blocs de roche du type choisi parmi le groupe des feldspaths, des tectosilicates, des inosilicates et des phyllosilicates, qui sont broyés à sec au moyen d'un broyeur (par exemple un broyeur à mâchoires ou un broyeur à galets), jusqu'à obtenir une poudre de particules dont au moins 80% comportent un diamètre de sphère équivalent unitaire inférieur à 15µm, de préférence inférieur à 5µm. Par exemple au moins 80% des particules obtenues ont un diamètre de sphère équivalent unitaire compris entre 1 et 7µm.

Un ou plusieurs traitements sont appliqués aux particules pendant ou après le broyage.

Ces traitements peuvent être destinés à :
- trier les particules selon leur taille
- sélectionner les particules les plus actives
- améliorer l'activité des particules.

### Tests illustrant l'efficacité d'un matériau sur l'initiation de la cristallisation

Comme les tests en vraie grandeur de l'efficacité d'un agent de nucléation sont longs et coûteux à mettre en œuvre, les inventeurs ont utilisé une méthode connue, réalisable en laboratoire, basée sur le refroidissement d'une plaque ou plaquette et l'observation à petite échelle de la température à laquelle la cristallisation d'une goutte d'eau calibrée est initiée.

### Protocole n°1 :

On prépare une lame mince, ou plaquette, du matériau silicate à tester, dont l'épaisseur est de l'ordre de 0,5 à 1mm.sur laquelle est déposée une goutte d'eau distillée.

Cette préparation est déposée sur un système de refroidissement du type plaque à effet Peltier dont la température est contrôlée au dixième de degré entre - 20°C et + 20°C (plaque réfrigérée à effet Peltier type Linkam précision 0,1°C).

Le système est placé dans un environnement clos dans des conditions d'humidité contrôlée de manière à éviter toute condensation.

La température est abaissée rapidement jusqu'à quelques degrés au dessus de 0°C et ensuite doucement (de l'ordre de 1°C/min.) tout en évaluant visuellement la congélation des gouttes au microscope optique.

Et on enregistre la température à laquelle la congélation s'est déclenchée pour chaque gouttelette.

Pour ce protocole n°1, comme la température des gouttes est plus élevée que la température de la plaque à effet Peltier, les températures mesurées sur la plaque Peltier doivent être augmentées d'une certaine valeur pour obtenir la température de nucléation recherchée.

L'écart précis fait l'objet d'une calibration préalable à l'aide d'un thermocouple introduit dans la goutte.

### Protocole n° 2 :

On utilise la poudre de silicate telle que préparée ci-dessus et on la met en suspension dans de l'eau distillée à la concentration volumique de l'ordre de 0,01% à 1%.

Des gouttes d'une telle suspension sont déposées sur une lamelle de verre support, du type utilisé classiquement en microscopie et dont on vérifie au préalable l'aspect inerte sur la nucléation.

La lamelle de verre ainsi préparée est déposée sur un système de refroidissement du type plaque à effet Peltier dont la température est contrôlée au dixième de degré entre - 20°C et + 20°C (plaque réfrigérée à effet Peltier type Linkam précision 0,1°C).

Le système est placé dans un environnement clos dans des conditions d'humidité contrôlée de manière à éviter toute condensation.

La température est abaissée rapidement jusqu'à quelques degrés au dessus de 0°C et ensuite doucement (de l'ordre de 1°C/min.) tout en évaluant visuellement la congélation des gouttes au microscope optique.

Et on enregistre la température à laquelle la congélation s'est déclenchée pour chaque gouttelette.

On notera que plus la température de congélation est élevée plus les gouttes restent transparentes, ce qui rend la détection par d'autres moyens, notamment automatiques, très incertaine.

Pour ce protocole n°2, comme la température des gouttes est plus élevée que la température de la plaque à effet Peltier, les températures mesurées sur la plaque Peltier doivent être augmentées d'une valeur de l'ordre de 1,5°C pour obtenir la température de nucléation recherchée.

### Résultats :

De très nombreux essais on été réalisés pour tester des particules de silicate, selon le protocole n°2 ci-dessus, dont les résultats apparaissent dans les tableaux 1 et 2 ci-dessous (divisés en deux pour une meilleure lisibilité).

**Tableau 1**

| **Echantillon** | **Minéral** | **Source** | **Famille** | **Temp.Maxi (°C)** | **Temp. Mini (°C)** | **Temp. Moyenne (°C)** |
|---|---|---|---|---|---|---|
| **Snomax** | Référence | Snomax | Bio | -2,5 | -5,5 | -2,9 |
| AZ-B1 | Amazonite | Brésil-Minas Gerais | Tectosilicate | -1,5 | -11,5 | -4,5 |
| AZ-K1 | Amazonite | Russie-Kola | Tectosilicate | -1,5 | -7,5 | -3,8 |
| OM1 | Microdine | Malawi-Mt Malosa | Tectosilicate | -0,5 | -6,7 | -2,6 |
| IFK1 | Microdine | Inde-Rajahstan | Tectosilicate | -13 | -13,5 | -4,4 |
| IF8 | Microdine | Inde-Rajahstan | Tectosilicate | -1 | -14,8 | -3,9 |
| ORI1 | Orthodase | Inde-Rajahstan | Tectosilicate | -2 | -13 | -4,3 |
| ORP | Orthodase | Madagascar | Tectosilicate | -1,5 | -10 | -2,8 |
| AEG1 | Aegyrine | Malawi-Mt Malosa | Inosilicate | -1,4 | -7,5 | -4,1 |
| Thor | Thorite | USA-El Paso NM | Nesosilicate | -2,5 | -6,2 | -3,6 |
| IF5 | K-Mica | Espagne | Phyllosilicate | -3 | -14,5 | -6,9 |

**Tableau 2**

| **Echantillon** | **Nombre d'expériences** | **% Très Hautes temp.** | **% Hautes temp.** |
|---|---|---|---|
| Snomax | 28 | 86% | 96% |
| AZ-B1 | 17 | 65% | 71% |
| AZ-K1 | 11 | 55% | 73% |
| OM1 | 124 | 80% | 92% |
| IFK1 | 144 | 40% | 69% |
| IF8 | 146 | 65% | 78% |
| ORI1 | 29 | 52% | 83% |
| ORP | 58 | 38% | 66% |
| AEG1 | 44 | 57% | 84% |
| Thor | 21 | 76% | 90% |
| IF5 | 46 | 22% | 30% |

Dans la suite de ce texte, on parlera de très hautes températures de cristallisation quand elles sont supérieures ou égales à -3°C et de hautes températures de cristallisation quand elles sont situées entre -4°C et -3°C.

Pour les différents échantillons référencés, ces tableaux 1 et 2 mentionnent le type de minéral, sa provenance (source), sa famille, les températures maximales et minimales de cristallisation obtenues, le nombre d'expériences réalisées, le pourcentage de très hautes températures de cristallisation obtenues et le pourcentage de hautes températures de cristallisation obtenues.

Comme le meilleur agent de nucléation connu est le produit SNOMAX (marque déposée), la température de nucléation de cet agent sur une lamelle de verre est la référence à laquelle les différents produits sont comparés dans tous les résultats.

Une première série d'essais sur le produit SNOMAX (marque déposée) a permis de filmer les différentes phases de la congélation d'une goutte et de calibrer les températures de nucléation.

D'une première série de minéraux broyés grossièrement, il a été trouvé qu'un feldspath particulier : l'amazonite (réf. AZ-B1), avait des performances aussi bonnes que le produit SNOMAX (marque déposée).

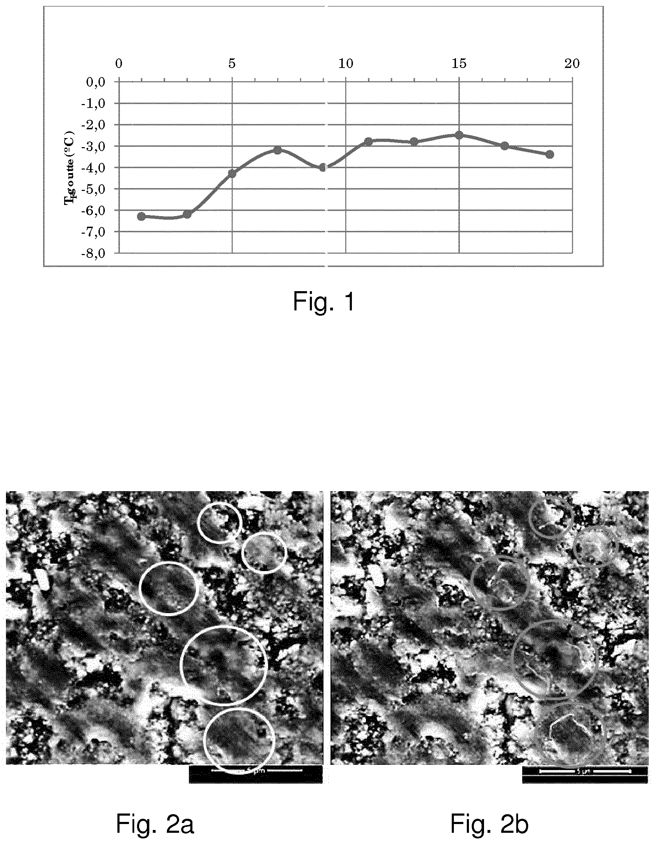

Cependant ces performances ne sont apparues qu'après plusieurs cycles de congélation/fonte, comme le montre la courbe de la figure 1.

Cette courbe de la figure 1 représente la température de congélation d'une même goutte (Tfgoutte(°C)) placée sur une plaquette d'Amazonite réf. AZ-B1 (selon le protocole n°1 ci-dessus), en fonction du nombre de cycles de congélation/fonte (dont le protocole est détaillé plus loin dans la description).

Sur cette figure, on remarque que la température de cristallisation, initialement de -6,2°C, s'améliore en fonction du nombre de cycles de congélation, pour arriver à -2,5°C au bout de 15 cycles.

Pour comprendre ce phénomène, des plaquettes ou lames minces d'amazonite ont été taillées pour mettre en œuvre le protocole n°1 ci-dessus. L'observation de la cristallisation des gouttes au microscope optique a montré que la glace provenait de sous la surface de la plaquette lorsque la température de nucléation était la plus élevée.

Les mêmes observations ont été réalisées sous microscope électronique ; une cartographie des sites de nucléation a été réalisée, et le seul élément remarquable mis en évidence a été la présence de microcavités en surface au niveau desquelles les cristaux de glace prenaient naissance.

De plus l'application d'un ou de plusieurs cycles de congélation/fonte s'est avérée faire apparaître des microfissures et de nouvelles microcavités.

Les figures 2a et 2b correspondent à deux clichés pris au microscope électronique qui montrent l'effet de la congélation d'une goutte d'eau posée sur la surface d'une plaquette mince de matériau réf. AZ-B1.
La figure 2a montre l'état de surface avant congélation de l'eau et la figure 2b montre l'état de surface après congélation.

Aux endroits encerclés qui correspondent aux mêmes zones de surface, on aperçoit nettement en blanc (après congélation) de nouvelles fissures très fines accompagnées de nouveaux trous (en noir) ; sur la figure 2b, en bas à droite, les fissures amorcent le détachement d'un grain de matériau de 2µm.

D'autre part, il a été remarqué que la disparition des microcavités s'associait à une baisse de la température de nucléation.

L'amazonite présentant l'inconvénient d'être une pierre semi-précieuse, d'autres feldspaths microclines ont été testés, dont le fonctionnement à haute température s'est montré similaire et même meilleur que l'amazonite.

C'est le cas notamment d'un microcline provenant du Mont Malosa au Malawi référencé OM1 dans les tests.

Il a été en effet possible avec cette variété de cristalliser l'eau à -0,5°C et ce dès la première congélation.

Toutefois la source de ce minéral est difficile, et il n'existe pas de mine de feldspath exploitable dans la région.

Il a été mis en évidence que ce minéral présente de nombreuses microcavités en surface débouchant par une ouverture de surface et délimitée par une paroi latérale qui définit son volume intérieur.

Comme la répétabilité est remarquable, il a été possible de photographier sous microscope électronique, en présence de vapeur d'eau, la naissance ou la génération de glace dans le volume intérieur de ces microcavités sur une plaquette de microcline réf. OM1.

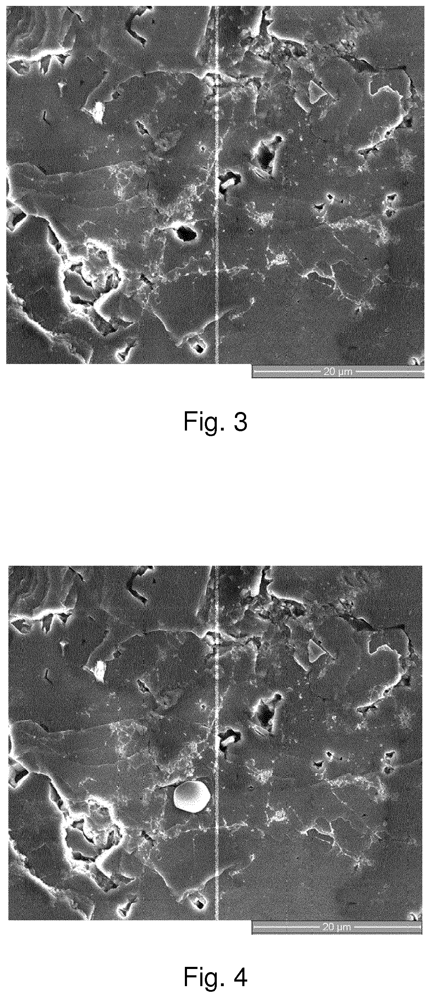

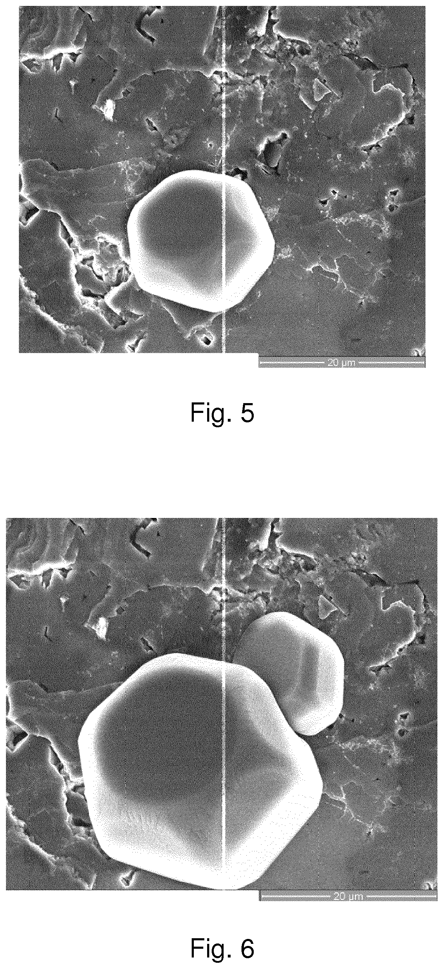

Cette naissance de la glace est illustrée en quatre étapes par les photographies des figures 3 à 6 annexées.

D'autres variétés (réf. IFK1 et IF8), en provenance de mines connues du Rajahstan, en Inde, nécessitent plusieurs congélations avant d'atteindre leurs meilleures températures de nucléation.

Dans le cas de ces 2 microclines agissant à très hautes températures (réf. IFK1 et IF8), la présence de microcavités a été constatée et est à l'origine de la nucléation d'une partie des zones de nucléation.

Ces microcavités « actives » ont été caractérisées au microscope par leur profondeur supérieure à la plus grande dimension de leur ouverture de surface, et de préférence par leur profondeur supérieure ou égale au diamètre équivalent de leur surface d'ouverture.

Des tests sur des particules (grains) de matériau ont montré qu'il y avait d'autant plus de grains actifs à très hautes températures que le nombre de telles microcavités était important.

En élargissant la recherche à d'autres feldspaths, il a été mis en évidence que plusieurs orthoclases comportent une température de nucléation relativement haute, dont 2 très hautes, comparables aux microclines.

L'un d'eux provient d'Inde (réf. ORI1), et l'autre de Madagascar (réf. ORP).

En élargissant encore la recherche les inventeurs ont trouvé 2 minéraux sans rapport avec les feldspaths qui agissent également à haute température : l'Aegyrine (réf. AEG1) et la Thorite (réf. Thor).

Bien que sans application possible directe dans l'enneigement, ces minéraux montrent que la capacité de nucléation à hautes températures n'est pas limitée aux feldspaths et que le phénomène est plus large. C'est le cas par exemple de certains micas potassiques (réf. K-Mica).

Il a également été mis en évidence que tous les microclines ne fonctionnent pas à hautes températures et que d'autres variétés ont des températures de nucléation comparables aux moins bons microclines.

En examinant l'échantillon de Thorite au microscope électronique, des microcavités de profondeur importante par rapport au diamètre équivalent de leur ouverture de surface ont été mises en évidence, caractéristique qui apparait donc comme essentielle à la nucléation dans les silicates.

Cette caractéristique peut ainsi être retenue pour le choix par l'homme du métier du matériau de base à utiliser, en vue de la préparation de particules actives à titre d'agent de nucléation dans la production de neige artificielle.

Sans que cela puisse être déduit d'une quelconque théorie, le confinement particulier de l'eau permet peut être à la glace de se former et d'atteindre la taille critique à température très élevée, puis de s'étendre en dehors de la microcavité, et ce jusqu'à plusieurs degrés au-dessus de la température de nucléation de la surface.

Le nombre de grains actifs en fonction du broyage est également un paramètre important puisque, pour qu'une poudre minérale additionnée à de l'eau soit viable économiquement, il ne faut pas que sa quantité soit trop grande.

En théorie, il suffit d'une particule par goutte pour effectuer la nucléation. En pratique, compte tenu des interactions entre gouttes, il n'est pas nécessaire que toutes les gouttes contiennent une particule. Une particule pour 10 gouttes s'avère suffisant.

D'autre part, la taille de cette particule ne doit pas dépasser 15µm pour qu'elle reste en suspension dans la goutte de taille comprise entre 100 et 500µm durant son temps de vol. Et elle ne doit pas être inférieure à 2µm pour présenter au moins une microcavité.

On arrive alors à des quantités de minéral de l'ordre de 100g à 2kg pour 380m3 d'eau.

On comprend que pour une application en neige de culture la proportion de grains actifs à très hautes températures est essentielle.

Dans ce cadre, pour améliorer la température de nucléation et augmenter le nombre de grains actifs, les inventeurs ont eu l'idée de chercher à créer de nouvelles microcavités sur les particules de matériau, ou de libérer (ou « nettoyer ») les microcavités existantes d'une partie au moins de la matière susceptible de les obturer.

Pour cela, différents traitements se sont révélés intéressants :
- le traitement par le froid (pour la création de nouvelles microcavités), et
- le traitement par ultrasons (sonification), par la potasse, par l'ozone et/ou par le plasma d'oxygène (pour le nettoyage des microcavités).

### Traitement(s) d'activation de la poudre de particules de silicate

A/ Traitements par le froid :
La poudre issue du broyage est mélangée à de l'eau et soumise à un ou plusieurs cycles de congélation.

Le mélange est congelé soit par aspersion sur une surface froide, soit en masse dans un conteneur approprié.

La température de congélation TC est abaissée en dessous de -7°C ; la descente en température se fait depuis la température ambiante à une vitesse de 1 à 20°C/minute.

Après congélation, le mélange est maintenu à la température TC pendant au moins 10 minutes.

Le mélange est ensuite dégelé à une température TD comprise entre +0,1°C et +4°C.

Une fois le mélange totalement dégelé, après 10 minutes, un autre cycle peut commencer.

Entre 1 et 15 cycles peuvent être ainsi effectués.

A la fin du dernier cycle, la poudre est extraite du mélange, par exemple par filtration, puis séchée.

On a constaté que ce traitement entraine la création de nouvelles microcavités actives (dont la profondeur est supérieure au diamètre équivalent de leur ouverture de surface) et la figure 1 montre l'efficacité d'un tel traitement sur l'augmentation de la température de nucléation.

Comme mentionné ci-dessus, la courbe de la figure 1 représente la température de congélation d'une même goutte placée sur une plaquette d'Amazonite réf. AZ-B1 (selon le protocole n°1 ci-dessus), en fonction du nombre de cycles de congélation/fonte.

On constate que la première congélation a lieu à -6,2°C, qu'après 7 cycles elle monte à -3,1°C pour atteindre un maximum de -2,5°C après 15 cycles.

B/ Traitement par plasma d'oxygène:
La poudre est rincée à l'eau pure puis séchée complètement.

Un deuxième séchage est effectué à l'Azote sec.

Disperser la poudre en couche mince sur un substrat inerte (par exemple une plaque de verre de silice).

Placer la plaque recouverte de poudre dans une chambre hermétique.

Fermer la chambre et tirer au vide (pression d'air inférieure à 20mbar).

Remplir la chambre de dioxygène jusqu'à une pression d'environ 200mbar.

Faire fonctionner pendant 20 à 30 minutes le générateur de plasma.

Rétablir la pression atmosphérique et brasser la poudre.

Répéter le cycle 2 ou 3 fois.

Des tests d'efficacité de ce traitement par plasma d'oxygène ont été réalisés sur des plaquettes de silicate réf. OM1, selon le protocole n°1.

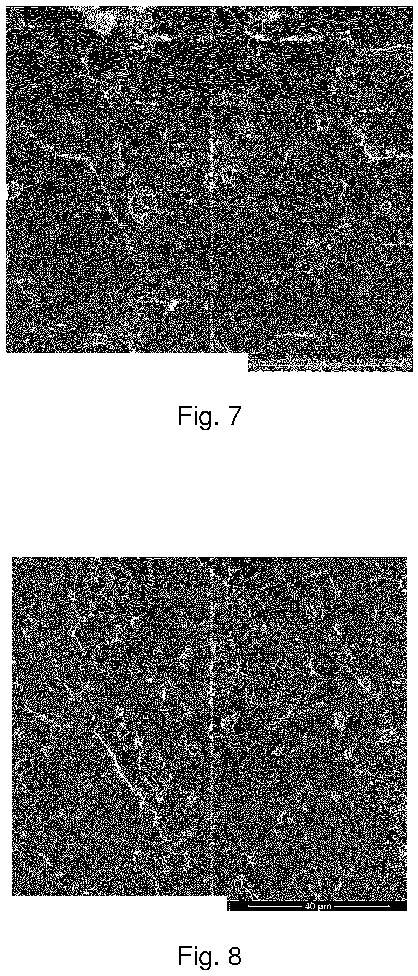

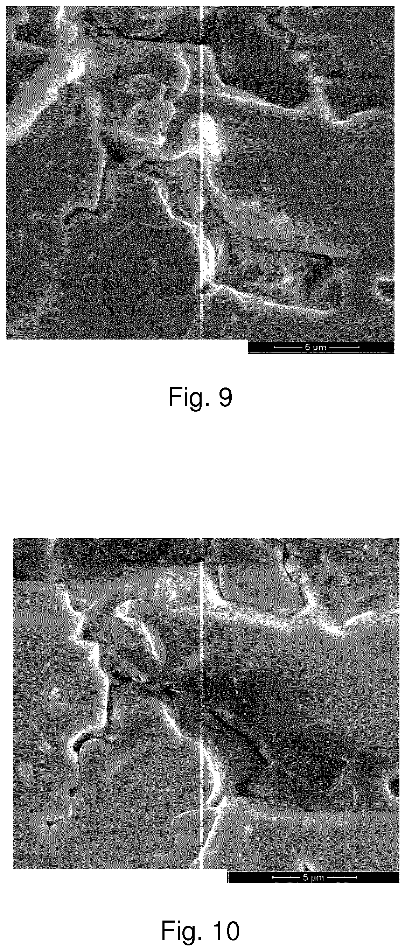

Les figures 7 et 8 sont des photographies au microscope électronique qui montrent l'état de surface de la plaquette correspondante avant et après le traitement par plasma d'oxygène, selon un premier grossissement ; et les figures 9 et 10 sont des photographies au microscope électronique qui montrent l'état de surface de la même plaquette, toujours avant et après le traitement par plasma d'oxygène, selon un second grossissement, plus important que le premier.

On remarque alors un plus grand nombre de microcavités sur la surface de la figure 8 par rapport à celle de la figure 7.

D'autre part, la figure 10 montre la disparition de débris ou particules des microcavités par rapport à la figure 9 et également la présence d'angles plus vifs.

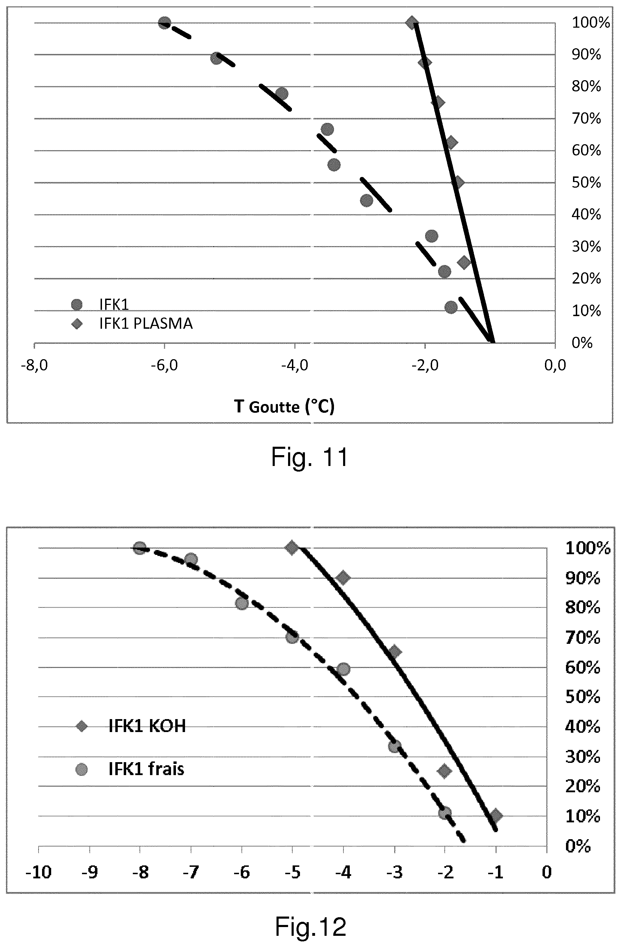

La figure 11 représente l'effet du traitement au plasma d'oxygène sur la température de congélation d'un ensemble de gouttes d'eau déposées sur une plaquette de silicate réf. IFK1, selon le protocole n°1.

L'axe des ordonnées représente le pourcentage cumulé de gouttes congelées. L'axe des abscisses représente la température de l'eau de la goutte.

Sur ce graphique, on remarque qu'avant traitement (courbe IFK1) 40% des gouttes congèlent au-dessus de -3°C, alors que 100% des gouttes sont congelées à -3°C après le traitement au plasma d'oxygène (courbe IFK1 PLASMA).

C/ Traitement par la potasse :
La poudre issue du broyage est mélangée à une solution d'hydroxyde de potassium de concentration entre 10 et 100% durant 20 à 60 minutes.

Puis elle est lavée à l'eau pure de sorte que le pH redevienne inférieur à 8. Ensuite la poudre peut-être séchée ou conservée dans de l'eau.

De nombreux tests ont été réalisés sur les mêmes minéraux, sans et avec le traitement ci-dessus par la potasse.

Sans le traitement par la potasse, la nucléation a été obtenue à très haute température dans 37% des cas, et à haute température dans 53% des cas.

Alors qu'avec le traitement par la potasse, la nucléation a été obtenue à très haute température dans 63% des cas et à haute température dans 48% des cas.

La figure 12 représente l'effet du traitement à la potasse 10% sur la température de congélation d'un ensemble de gouttes d'eau contenant de l'IFK1 en poudre (particules inférieures à15µm) déposées sur une lamelle de verre et testées selon le protocole n°2 (courbe IFK1 KOH).

Par comparaison, on montre la courbe d'IFK1 broyé manuellement immédiatement avant test (courbe IFK1 frais).

L'axe des ordonnées représente le pourcentage cumulé de gouttes congelées. L'axe des abscisses représente la température de l'eau de la goutte.

On constate qu'avant traitement moins de 30% des gouttes congèlent au-dessus de -3°C, alors que plus de 60% des gouttes sont congelées au dessus de -3°C après traitement à la potasse.

Notons également que 100 % des gouttes sont congelées à -5°C après traitement, alors qu'il faut atteindre -8°C pour obtenir ce résultat avec le produit brut fraîchement broyé.

D/ Traitement par ozone :
La poudre est rincée à l'eau pure puis séchée complètement.

Un deuxième séchage est effectué à l'azote sec.

Disperser la poudre en couche mince sur un substrat inerte (par exemple une plaque de verre de silice).

Placer la plaque recouverte de poudre dans une chambre.

Fermer la chambre et la remplir de dioxygène.

Faire circuler le dioxygène pendant au moins 5 minutes.

Démarrer la lampe à ultraviolets qui transforme le dioxygène en ozone.

Laisser la poudre exposée à l'ozone pendant 20 à 30 minutes.

Arrêter la lampe et ouvrir la chambre.

Rincer la poudre avec de l'eau pure.

Optionnellement, la faire sécher.

Optionnellement, recommencer le cycle plusieurs fois.

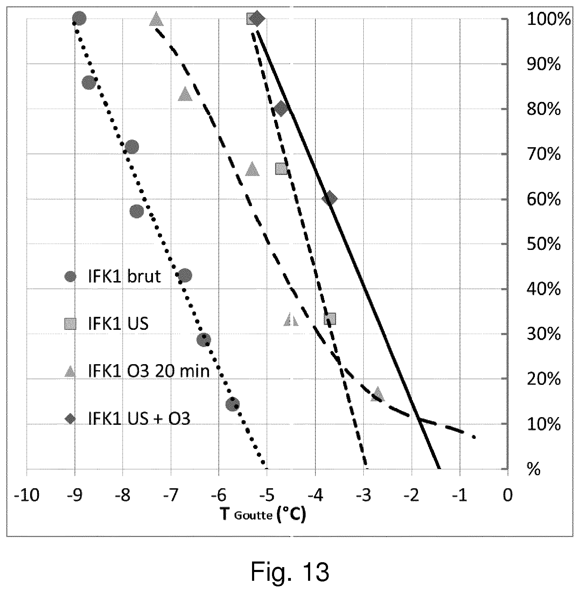

Des résultats montrant l'efficacité de ce traitement par ozone apparaissent sur la figure 13 annexée, commentée ci-après.

E/ Traitement par ultrasons (sonification) :
Les microcavités ont tendance à se boucher naturellement ; notamment, lors du broyage, les particules les plus fines viennent adhérer aux surfaces et obstruer les pores. Les impuretés présentes lors des différentes étapes d'obtention du produit peuvent également jouer le même rôle. Ces impuretés sont souvent organiques. L'usage des ultrasons permet de décoller un éventuel biofilm ou des grains retenus par effet de surface et de casser certaines impuretés.

### Traitement appliqué :

La poudre brute ou mélangée à de l'eau est placée dans un conteneur lui-même immergé dans une cuve à ultrasons.

La cuve fonctionne avec un générateur de fréquence 40kHz et l'exposition dure au minimum 10 minutes.

Une variante consiste à immerger un générateur d'ultrasons dans le conteneur de poudre.

Des résultats montrant l'efficacité de ce traitement par ultrasons apparaissent sur la figure 13 présentée ci-dessous.

Cette figure13 représente l'effet des traitements par ozone et sonification sur la température de congélation d'un ensemble de gouttes d'eau (TGoutte(°C)) contenant de la poudre d'IFK-1, testées individuellement selon le protocole 2.

Le même lot de poudre d'IFK1 a été utilisé pour les 4 séries de tests.

L'axe des ordonnées représente le pourcentage cumulé de gouttes congelées. L'axe des abscisses représente la température de l'eau de la goutte.

Sur cette figure 13 :
- la courbe « IFK1 brut » illustre les résultats obtenus sans traitement,
- la courbe « IFK1 US » illustre les résultats obtenus avec le traitement par ultrasons (sonification),
- la courbe « IFK1 O3 20Min. » illustre les résultats obtenus avec traitement par ozone (pendant 20 minutes), et
- la courbe « IFK1 US + O3 » illustre les résultats obtenus avec traitement par ultrasons suivi d'un traitement par l'ozone.

On peut constater les différents effets du traitement à l'ozone (O3), de la sonification (US) et des deux combinés.

On constate que les première gouttes contenant la poudre non traitée d'IFK1 congèlent à-5,7°C et ne représentent que 12% des gouttes. Pour avoir 100% de gouttes congelées, il faut descendre à une température de -8,9°C

Le traitement par sonification (IFK1 US) améliore la température de première congélation et le pourcentage de gouttes congelées à la plus haute température puisque 32% des gouttes sont congelées à -3,7°C. On notera aussi que 100% des gouttes sont congelées -5,2°C.

Le traitement à l'ozone seul (IFK1 O3) améliore encore la température de congélation des premières gouttes : 17% ont congelé dès -2,7°C. 100% des gouttes sont congelées à -7,3°C, ce qui est meilleur que le produit brut mais moins bon que le traitement par sonification.

En combinant les deux traitements, on obtient une augmentation importante du nombre de grains actifs à haute température puisque 60% des gouttes sont congelées à -3,7°C et 100% à -5,2°C.

On notera que les différents traitements mentionnés ci-dessus peuvent être mis en œuvre isolément ou en combinaison. En particulier un traitement de sonification est avantageusement mis en œuvre avant tout autre traitement.

### Mode opératoire pour la fabrication de neige artificielle

Les particules de silicate de préférence activées par un ou plusieurs des traitements précités sont incorporées dans l'eau d'alimentation des dispositifs enneigeurs, en nombre compris entre 5 x 10⁵ et 2 x 10¹⁰ particules par litre d'eau, de préférence entre 5 x 10⁵ et 7 x 10⁸ particules par litre d'eau, de manière à obtenir entre une particule de silicate pour 10 gouttelettes d'eau et dix particules de silicate par gouttelette d'eau, sachant que la taille recherchée des gouttelettes à produire est comprise entre 100 et 700µm.

La projection des gouttelettes dans l'air ambiant pour la fabrication de la neige est réalisée par tout dispositif connu de production de neige artificielle.

A titre de variante une partie du dispositif de production de neige en contact avec le flux d'eau peut être réalisée en silicate, ledit flux d'eau prélevant alors la quantité nécessaire de particules par érosion.

Un tel procédé peut aussi servir à la fabrication de glace, par exemple au sein d'une patinoire ou dans une machine de production de glace en écailles (« crushed ice ») par projection d'eau contenant l'agent de nucléation sous forme de particules de silicate contre une surface froide (Température inférieure ou égale à 0°C). Dans ces cas, la haute température de nucléation permet d'utiliser des températures d'eau, donc de fluide frigorigène plus élevées et donc d'améliorer le rendement.

## Revendications

1. Procédé de fabrication de neige consistant à incorporer dans de l'eau des particules d'agent de nucléation et à projeter ladite eau contenant lesdites particules d'agent de nucléation sur une surface ou dans une ambiance dont la température est inférieure à 0°C, au moyen d'un dispositif adapté à la production de neige ou de glace,
lesdites particules d'agent de nucléation comprenant des particules de silicate dont le diamètre de sphère équivalent unitaire est inférieur à 15µm, de préférence inférieur à 5µm,
où le procédé consiste en outre à soumettre lesdites particules à au moins un traitement d'activation préalablement à leur incorporation dans l'eau, **caractérisé en ce que** ledit au moins un traitement d'activation comprend la création d'au moins une microcavité sur la surface desdites particules.

2. Procédé selon la revendication 1, **caractérisé en ce qu'**il consiste à utiliser une base de particules de silicate, dans laquelle base au moins 80% des particules comportent un diamètre de sphère équivalent unitaire inférieur à 15µm, et de préférence inférieur à 5µm.

3. Procédé selon l'une quelconque des revendications 1 ou 2, **caractérisé en ce que** le silicate est choisi parmi le groupe constitué des feldspaths, des tectosilicates, des inosilicates et des phyllosilicates.

4. Procédé selon la revendication 3, **caractérisé en ce que** le silicate est un feldspath de type microcline et/ou un feldspath de type orthoclase.

5. Procédé selon l'une quelconque des revendications 1 à 4, **caractérisé en ce que** les particules de silicate sont incorporées dans l'eau en nombre compris entre 5 x 10⁵ et 2 x 10¹⁰ particules par litre d'eau, de préférence entre 5 x 10⁵ et 7 x 10⁸ particules par litre d'eau.

6. Procédé selon l'une quelconque des revendications 1 à 5, **caractérisé en ce que** ladite projection de l'eau contenant lesdites particules de silicate consiste en une pulvérisation de l'eau sous forme de gouttelettes dont la taille est comprise entre 100 et 700µm, et **en ce que** les particules de silicate sont incorporées dans l'eau de manière à obtenir entre une particule de silicate pour 10 gouttelettes d'eau et dix particules de silicate par gouttelette d'eau.

7. Procédé selon l'une quelconque des revendications 1 à 6, **caractérisé en ce qu'**il consiste à créer au moins une microcavité sur la surface desdites particules, laquelle microcavité débouche par une ouverture de surface et est délimitée par une paroi latérale, la profondeur de ladite au moins une microcavité étant supérieure au diamètre du disque équivalent à la surface de ladite ouverture de surface.

8. Procédé selon l'une quelconque des revendications 1 à 7, **caractérisé en ce que** ledit au moins un traitement d'activation consiste à appliquer aux particules préalablement imprégnées d'eau au moins un traitement par le froid, et de préférence au moins deux traitements par le froid successifs, séparés par une phase de réchauffement.

9. Procédé selon l'une quelconque des revendications 1 à 7, **caractérisé en ce que** ledit au moins un traitement d'activation consiste à exposer lesdites particules à une atmosphère d'ozone, dans un réacteur adapté, de préférence durant au moins 20 minutes, à une température comprise entre 0°C et 300°C.

10. Procédé selon l'une quelconque des revendications 1 à 7, **caractérisé en ce que** ledit au moins un traitement d'activation consiste à exposer lesdites particules à un plasma d'oxygène, dans un réacteur adapté, de préférence durant au moins 20 minutes à une température entre 0°C et 300°C.

11. Procédé selon l'une quelconque des revendications 1 à 7, **caractérisé en ce que** ledit au moins un traitement d'activation consiste à immerger lesdites particules dans une solution aqueuse de potasse, de préférence durant au moins 20 minutes et à une température comprise entre 0°C et 90°C.

12. Procédé selon l'une quelconque des revendications 1 à 11 **caractérisé en ce que** ledit au moins un traitement d'activation comprend une étape de nettoyage et de séparation desdites particules par ultrasons.

13. Produit sous forme poudreuse issu du broyage de blocs de roche du type choisi parmi le groupe des feldspaths, des tectosilicates, des inosilicates et des phyllosilicates, comprenant des particules de silicate dont le diamètre de sphère équivalent unitaire est inférieur à 15µm, où lesdites particules ont été soumises à un traitement d'activation pour créer au moins une microcavité sur la surface desdites particules, où au moins 10% desdites particules de silicate comportant au moins une microcavité débouchant par une ouverture de surface et délimitée par une paroi latérale qui définit son volume intérieur, lequel produit est apte à être incorporé dans de l'eau pour servir d'agent de nucléation dans le cadre de la mise en œuvre du procédé de fabrication de neige selon l'une quelconque des revendications 1 à 12.

14. Produit selon la revendication 13, **caractérisé en ce que** au moins 10% desdites particules de silicate comportent au moins une microcavité débouchant par une ouverture de surface et délimitée par une paroi latérale, la profondeur de ladite au moins une microcavité étant supérieure à la plus grande dimension de ladite ouverture de surface.

15. Produit selon la revendication 14, **caractérisé en ce que** l'ouverture de surface de ladite au moins une microcavité a un diamètre équivalent compris entre 100 et 1000nm et une profondeur comprise entre 700nm et 3µm.

16. Utilisation d'un produit sous forme poudreuse selon l'une quelconque des revendications 13 à 15, pour servir d'agent de nucléation dans le cadre la mise en œuvre du procédé de fabrication de neige selon l'une quelconque des revendications 1 à 12.

## Patentansprüche

1. Herstellungsverfahren von Kunstschnee, das darin besteht, Kristallbildungsteilchen in Wasser einzubringen und das besagte Wasser mit diesen Kristallbildungsteilchen mittels einer für die Herstellung von Schnee oder Eis ausgelegten Vorrichtung auf eine Oberfläche zu sprühen oder in eine Umgebung einzubringen, deren Temperatur unter 0 °C ist,
wobei die Kristallbildungsteilchen Silikatteilchen enthalten, deren äquivalenter Kugeldurchmesser pro Einheit kleiner als 15 µm, vorzugsweise kleiner als 5 µm ist, wobei das Verfahren außerdem darin besteht, die besagten Teilchen vor deren Einbringen in Wasser mindestens einer Aktivierungsbehandlung zu unterziehen,
**dadurch gekennzeichnet, daß** die mindestens eine Aktivierungsbehandlung das Erzeugen mindestens einer Mikrovertiefung auf der Oberfläche der besagten Teilchen beinhaltet.

2. Verfahren gemäß Anspruch 1, **dadurch gekennzeichnet, daß** es darin besteht, eine Silikatteilchenbasis zu verwenden, bei der mindestens 80 % der Teilchen einen äquivalenten Kugeldurchmesser pro Einheit von kleiner als 15 µm, vorzugsweise kleiner als 5 µm aufweisen.

3. Verfahren gemäß einem der Ansprüche 1 oder 2, **dadurch gekennzeichnet, daß** das Silikat aus der aus Feldspaten, Tektosilikaten, Inosilikaten und Phyllosilikaten gebildeten Gruppe ausgewählt ist.

4. Verfahren gemäß Anspruch 3, **dadurch gekennzeichnet, daß** das Silikat ein Feldspat vom Mikroline-Typ und/oder ein Feldspat vom Orthoklas-Typ ist.

5. Verfahren gemäß einem der Ansprüche 1 bis 4, **dadurch gekennzeichnet, daß** die Silikatteilchen in einer Menge von zwischen 5 x 10⁵ und 2 x 10¹⁰ Teilchen pro Liter Wasser, vorzugsweise von zwischen 5 x 10⁵ und 7 x 10⁸ Teilchen pro Liter Wasser ins Wasser eingebracht werden.

6. Verfahren gemäß einem der Ansprüche 1 bis 5, **dadurch gekennzeichnet, daß** das Versprühen des die Silikatteilchen enthaltenden Wassers aus einem Versprühen des Wassers in Form von Tröpfchen, deren Größe zwischen 100 und 700 µm beträgt, besteht und daß die Silikatteilchen so ins Wasser eingebracht werden, daß zwischen einem Silikatteilchen pro 10 Tröpfchen Wasser und zehn Silikatteilchen pro Tröpfchen Wasser erhalten wird.

7. Verfahren gemäß einem der Ansprüche 1 bis 6, **dadurch gekennzeichnet, daß** es darin besteht, auf der Oberfläche der Teilchen mindestens eine Mikrovertiefung zu schaffen, wobei die Mikrovertiefung mit einer Oberflächenöffnung endet und durch eine Seitenwand begrenzt ist, wobei die Tiefe der mindestens einen Mikrovertiefung größer als der Durchmesser der der Oberfläche der Oberflächenöffnung äquivalenten Scheibe ist.

8. Verfahren gemäß einem der Ansprüche 1 bis 7, **dadurch gekennzeichnet, daß** die mindestens eine Aktivierungsbehandlung darin besteht, auf die zuvor mit Wasser imprägnierten Partikel mindestens eine Kältebehandlung, und vorzugsweise mindestens zwei aufeinanderfolgende und durch eine Aufwärmphase getrennte Kältebehandlungen anzuwenden.

9. Verfahren gemäß einem der Ansprüche 1 bis 7, **dadurch gekennzeichnet, daß** die mindestens eine Aktivierungsbehandlung darin besteht, die besagten Partikel in einem angepaßten Reaktor vorzugsweise mindestens 20 Minuten lang einer Temperatur zwischen 0 °C und 300 °C einer Ozonatmosphäre auszusetzen.

10. Verfahren gemäß einem der Ansprüche 1 bis 7, **dadurch gekennzeichnet, daß** die mindestens eine Aktivierungsbehandlung darin besteht, die besagten Partikel in einem angepaßten Reaktor vorzugsweise mindestens 20 Minuten lang einer Temperatur zwischen 0 °C und 300 °C einem Sauerstoffplasma auszusetzen.

11. Verfahren gemäß einem der Ansprüche 1 bis 7, **dadurch gekennzeichnet, daß** die mindestens eine Aktivierungsbehandlung darin besteht, die Partikel vorzugsweise mindestens 20 Minuten lang und bei einer Temperatur zwischen 0 °C und 90 °C in eine wässrige Pottaschelösung einzutauchen.

12. Verfahren gemäß einem der Ansprüche 1 bis 11, **dadurch gekennzeichnet, daß** die mindestens eine Aktivierungsbehandlung einen Schritt der Reinigung und der Trennung der Partikel durch Ultraschall aufweist.

13. Produkt in Pulverform, das durch Zermahlen von Felsblöcken des aus der Gruppe der Feldspate, Tektosilikate, Inosilikate und Phyllosilikate gebildeten Typs, die Silikatteilchen aufweisen, deren äquivalenter Kugeldurchmesser pro Einheit kleiner als 15 µm ist, erhalten worden ist, wobei die Teilchen einer Aktivierungsbehandlung unterzogen worden sind, um auf der Oberfläche der Teilchen mindestens eine Mikrovertiefung zu erzeugen, wobei mindestens 10 % der Silikatteilchen mindestens eine mit einer Oberflächenöffnung endende und durch eine deren Innenvolumen definierende Seitenwand begrenzte Mikrovertiefung aufweisen, wobei das Produkt geeignet ist, in Wasser eingebracht zu werden, um im Rahmen der Durchführung des Schneeherstellungsverfahrens gemäß einem der Ansprüche 1 bis 12 als Teilchenbildner zu wirken.

14. Produkt gemäß Anspruch 13, **dadurch gekennzeichnet, daß** mindestens 10 % der Silikatteilchen eine mit einer Oberflächenöffnung endenden und durch eine Seitenwand begrenzte Mikrovertiefung aufweisen, wobei die Tiefe der mindestens einen Mikrovertiefung größer als die größte Abmessung der Oberfläche der Oberflächenöffnung ist.

15. Produkt gemäß Anspruch 14, **dadurch gekennzeichnet, daß** die Oberflächenöffnung der mindestens einen Mikrovertiefung einen äquivalenten Durchmesser zwischen 100 und 1000 nm und eine Tiefe zwischen 700 nm und 3 µm hat.

16. Verwendung eines Produkts in Pulverform gemäß einem der Ansprüche 13 bis 15, um im Rahmen der Durchführung des Schneeherstellungsverfahrens gemäß einem der Ansprüche 1 bis 12 als Teilchenbildner zu wirken.

## Claims

1. A snow making method consisting in incorporating nucleation agent particles into water and in spraying said water containing said nucleation agent particles onto a surface or into an environment whose temperature is lower than 0°C, by means of a device for producing snow or ice,
said nucleation agent particles comprising silicate particles whose unit equivalent spherical diameter is lower than 15 µm, preferably lower than 5 µm,
wherein the method consists also of subjecting said particles to at least one activation treatment before their incorporation into water,
**characterized in that** said at least one activation treatment comprises the creation of at least one micro-cavity on the surface of said particles.

2. The method according to claim 1, **characterized in that** it consists in using a base of silicate particles, in which base at least 80% of the particles have a unit equivalent spherical diameter lower than 15 µm, and preferably lower than 5 µm.

3. The method according to claim 1 or 2, **characterized in that** the silicate is chosen among the group consisting of the feldspars, tectosilicates, inosilicates and phyllosilicates.

4. The method according to claim 3, **characterized in that** the silicate is a feldspar of the microcline type and/or a feldspar of the orthoclase type.

5. The method according to claim 1, **characterized in that** the silicate particles are incorporated into the water in a number comprised between 5 x 10⁵ and 2 x 10¹⁰ particles per litre of water, preferably between 5 x 10⁵ and 7 x 10⁸ particles per litre of water.

6. The method according to claims 1 to 5, **characterized in that** said spraying of the water containing said silicate particles consists in spraying the water in the form of droplets whose size is comprised between 100 and 700 µm,
and wherein the silicate particles are incorporated into the water so as to obtain between one silicate particle for 10 water droplets and ten silicate particles per water droplet.

7. The method according to any of the claims 1 to 6, **characterized in that** it consists in creating at least one micro-cavity on the surface of said particles, wherein said micro-cavity opens through a surface aperture and is delimited by a lateral wall, the depth of said at least one micro-cavity being greater than equivalent disk diameter of the area of said surface aperture.

8. The method according to any of the claims 1 to 7, **characterized in that** said at least one activation treatment consists in applying to the previously water impregnated particles at least one cold treatment, preferably said at least one activation treatment consists in applying to the previously water impregnated particles at least two successive cold treatments, separated by a warming phase.

9. The method according to any of the claims 1 to 7, **characterized in that** said at least one activation treatment consists in exposing said particles to an ozone atmosphere in a suitable reactor, preferably during at least 20 minutes, at a temperature comprised between 0°C and 300°C.

10. The method according to any of the claims 1 to 7, **characterized in that** said at least one activation treatment consists in exposing said particles to an oxygen plasma in a suitable reactor, preferably during at least 20 minutes, at a temperature comprised between 0°C and 300°C.

11. The method according to any of the claims 1 to 7, **characterized in that** said activation treatment comprises the step consisting in immersing said particles into an aqueous solution of potash during at least 20 minutes and at a temperature comprised between 0°C and 90°C.

12. The method according to any of the claims 1 to 11, **characterized in that** said at least one activation treatment comprises a step of ultrasound cleaning and separation of said particles.

13. A powdery product obtained by grinding rock blocks chosen among the group consisting of feldspars, tectosilicates, inosilicates and phyllosilicates, comprising silicate particles which have a unit equivalent spherical diameter lower than 15 µm, wherein said particles have been subjected to an activation treatment to create at least one micro-cavity on the surface of said particles, wherein at least 10% of said silicate particles comprise at least one micro-cavity opening through a surface aperture and delimited by a lateral wall which defines its internal volume, which product is intended to be incorporated into water to serve as a nucleation agent in the context of the implementation of the snow making method according to any one of claims 1 to 12.

14. The product according to claim 13, **characterized in that** at least 10% of said silicate particles comprise at least one micro-cavity opening through a surface aperture and delimited by a lateral wall, the depth of said at least one micro-cavity being greater than the maximum dimension of said surface aperture.

15. The product according to claim 14, **characterized in that** the surface aperture of said at least one micro-cavity has an equivalent diameter comprised between 100 and 1000 nm and a depth comprised between 700 nm and 3 µm.

16. Use of a product in powdery form according to any one of claims 13 to 15, as a nucleation agent within the framework of the implementation of the snow making method according to any one of claims 1 to 12.
